# EUROPEAN PATENT APPLICATION

(11) **EP 4 307 740 A1**
(43) Date of publication of application: **17.01.2024**
(21) Application number: 22185266.8
(22) Date of filing: 15.07.2022
(51) Int. Cl.: H04W 12/0433, H04W 12/0431, H04W 12/082, H04W 12/084, H04W 4/40

(54) **APPARATUS, DEVICE, METHOD AND COMPUTER PROGRAM**

(71) Applicant: Bayerische Motoren Werke Aktiengesellschaft, 80809 München (DE)
(72) Inventor: Knott, Thorsten, 83104 Tuntenhausen (DE); Ruester, Christoph, 85774 Unterföhring (DE)

(57) **Abstract**

Embodiments relate to an apparatus 30. The apparatus 30 for a vehicle comprises interface circuitry 32 configured to receive, from a device, a signal comprising information indicative of a digital key protocol and storage circuitry 36 configured to store the information.

## Description

The present disclosure relates to the field of digital identity authorization. Embodiments relate to an apparatus, a device, a method and a computer program.

Authorization processes enables a user of a device to enable certain functionality with his device, e.g., validate a bank transfer, validate a generation of a digital key. For example, the use of a digital key enables a user of a vehicle to open it particularly easily. In particular, smart access can be used to configure a user device to act as a digital key for a vehicle. For this purpose, an invitation for a digital key, also called a data key, can be passed on to a friend device (also referred to as sharee) by the user (owner) device (also referred to as sharer) for configuration of the friend device. This allows the friend device to be configured/authenticated in such a way that access, for example opening, starting, etc. of the vehicle is enabled via wireless communication, for example Bluetooth or ultra-wideband technology (UWB). However, to perform a key sharing the friend device needs to establish a connection to a network entity, e.g., a base station via telecommunication. Thus, there may be need to improve a key sharing process.

It is therefore a finding that a key sharing can be improved by using an apparatus. An apparatus may be e.g., a smart card (which is battery-free and receives power through at least one of a card connector or induction) or a key fob. Both the smart card and the key fob do not comprise an internet connectivity. Thus, a key sharing process can be eased since no internet connection of a sharee, the apparatus, is needed.

Examples provide an apparatus for a vehicle, comprising interface circuitry configured to receive, from a device, a signal comprising information indicative of a digital key protocol to enable a key sharing flow between the apparatus and a device and storage circuitry configured to store the information. This way, the apparatus can be configured to act in conformity with the digital key protocol, e.g. Car Connectivity Consortium's (CCC) standard, e.g., the CCC standard release 3 ([1]). Thus, a battery-free device can be utilized as digital key according to the CCC standard [1].

In an example, the interface circuitry may be further configured to receive the signal from the device via at least one interface of Bluetooth, Bluetooth Low Energy, ultra-wide band , wireless local-area network or near field communication. This way, the apparatus can receive needed information to be configured as digital key according to [1] with communication processes with a low distance. Thus, depending on a communication technology used the apparatus would not necessarily need to implement a battery, e.g., no battery may be needed for an NFC interface. For example, the interface for Bluetooth, Bluetooth Low Energy, ultra-wide band , wireless local-area network or near field communication are compliant interfaces to [1].

In an example, the apparatus may further comprise processing circuitry configured to generate a universal instance certificate authority, which can be utilized by a plurality of vehicle original equipment manufacturer. For example, the universal instance certificate authority could be trusted by and therefore could be used by a plurality of vehicle original equipment manufacturers (OEM). This way, a storage need on the storage circuitry can be reduced, since for the instance certificate authority could be used for a plurality of OEM.

In an example, the signal may comprise information indicative of a digital key applet. This way, the digital key applet can be stored on the apparatus. Thus, a digital key applet can be stored in the storage circuitry, e.g., a digital key applet according to [1]. Thus, the apparatus can be used as sharee in accordance with [1].

In an example, the signal may comprise information indicative of a generation for a digital key during a digital key sharing. This way, information about a generated key for a sharee can be stored on the apparatus.

In an example, the interface circuitry may be further configured to transmit to the device a key signing request comprising a certificate comprising a friend digital key certificate. This way, the apparatus can store information needed for a signature process of a generated digital key.

In an example, the processing circuitry may be further configured to generate a digital key and to overwrite a digital key in the storage circuitry if the storage circuitry already comprises a digital key. For example, the processing circuitry may be configured to generate a digital key, to manage an eligibility and/or entitlements of a digital key, e.g., to overwrite a digital key in the storage circuitry if the storage circuitry already comprises a digital key. This way, a digital key management can be improved.

Examples provide a device for setting up an apparatus as described above. The device comprises interface circuitry configured to transmit, to the apparatus, a signal comprising information indicative of a digital key protocol to enable a key sharing flow between the apparatus and a device and processing circuitry (14) configured to generate the signal. This way, the apparatus can be configured to act in conformity with the digital key protocol, e.g. as described in [1]. Thus, a battery-free device can be utilized as digital key according to the CCC standard [1].

In an example, the interface circuitry may be further configured to transmit a tracking signal to register a digital key to a backend, e.g., an OEM, and the processing circuitry may be further configured to generate the tracking signal. This way, a digital key can be maintained by the backend.

In an example, the signal may further comprise information indicative of a digital key. This way, the device can transmit information needed gaining access to a vehicle.

In an example, the signal further comprises information indicative of an invalidation of a digital key stored on the apparatus. For example, the information may be indicative for a management of eligibility and/or entitlements of a digital key stored on an apparatus. This way, the device can maintain the apparatus, e.g., the storage circuitry of the apparatus.

In an example, the tracking signal may further comprise information indicative a certificate used for generating a digital key stored on the apparatus. This way, the device can transmit information to the backend about a certificate.

In an example, the device is at least one of a user equipment or a smart card reader.

Examples provide a method for an apparatus comprising receiving, from a device, a signal comprising information indicative of a digital key protocol to enable a key sharing flow between the apparatus and a device.

Some examples of apparatuses, methods and/or computer programs will be described in the following by way of example only, and with reference to the accompanying figures, in which
Fig. 1 shows a block diagram of an example of an apparatus;
Fig. 2 shows a block diagram of an example of a device;
Fig. 3 shows a block diagram of an example of an applet deployment;
Figs. 4a, 4b show examples of device structures; and
Fig. 5 shows an example of a method.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

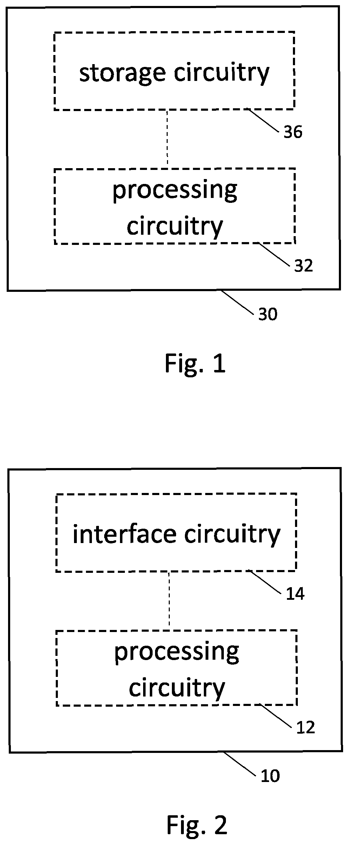

Fig. 1 shows a block diagram of an example of an apparatus 30. The apparatus 30 for a vehicle comprises interface circuitry 32 configured to receive, from a device, a signal comprising information indicative of a digital key protocol to enable a key sharing flow between the apparatus and a device and storage circuitry 36 configured to store the information.

An apparatus could be a battery-free device and could receive power through at least one of a card connector or induction. The apparatus is an offline device, such that the apparatus does not comprise an internet connection. In [1] a sharee requires an internet connection for performing a digital key sharing flow. In contrast the apparatus 30 can be configured to act as a sharee in accordance with [1] without a need of an internet connection, e.g., to connect to a relay server. Instead the device may act as relay server for the apparatus, to provide all needed information for the apparatus 30, such that the apparatus 30 can be used as sharee.

For example, the apparatus 30 can be used as offline token. The apparatus 30 may comprise a secure element to host applet and key data, e.g., a digital key applet. The applet and key data may be stored in the storage circuitry 36 of the apparatus 30. The apparatus 30 may have an interface compliant to [1], e.g., NFC, BLE or UWB. By use of the apparatus, a management of offline tokens using CCC infrastructure defined in [1] and/or user touchpoints can be provided. For example, if the apparatus 30 is a smart card it can be used to replace known systems, such like a key fob. This way, a production cost of a sharee can be reduced.

A key sharing flow between the apparatus 30 and a sharer may be done using a mechanism based on CCC key sharing described in [1]. Instead of a receiving key creation and attestation data from the sharer, e.g., an owner/admin/server, through an apparatus's internet link, necessary data for key creation may be transferred to the apparatus 30 using the interface circuitry 32 through the device. This way, the apparatus 30 does not need to be configured to access the internet. Optionally, the device may act as proxy. The device (e.g., the proxy) could be an NFC interface of the sharer itself (e.g., sharing through NFC interface or BLE interface of a user equipment of the owner to the apparatus 30 itself), an NFC reader connected to a personal computer, linking to the key creation server directly or through a device OEM server. Optionally, an encryption on the device interface circuitry can increase a protection against a man-in-the-middle attack.

In an example, the interface circuitry may be further configured to receive the signal from the device via at least one interface of Bluetooth, Bluetooth Low Energy, ultra-wide band , wireless local-area network or near field communication. The apparatus 30 has no immediate internet connectivity interface. A digital key framework on the apparatus may be only needed for non-NFC-only keys.

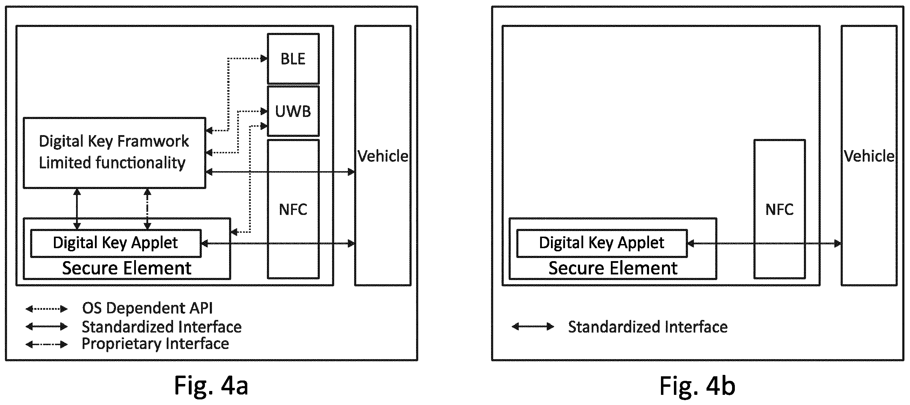

The apparatus's digital key framework functionality may provide basic BLE/UWB functionality (see also Fig. 4). This way, the production cost of the apparatus 30 can be reduced. The digital key framework can be hosted on NFC, BLE or UWB chip comprised by the apparatus 30, e.g., by the interface circuitry 32. For example, the interface circuitry may be an NFC, BLE or UWB chip. Thus, no separate chip may be needed. The interface circuitry 32 can be used to communicate with the device, e.g., an NFC reader, for applet deployment(e.g., installing/storing a digital key applet on the apparatus 30), key deployment (e.g., transmitting information about a key sharing flow) and/or key management (e.g., delete an expired digital key on the apparatus 30).

In an example, the apparatus 30 may further comprise a processing circuitry configured to generate a universal instance certificate authority, which can be utilized by a plurality of vehicle original equipment manufacturer. For example, the universal instance certificate authority could be trusted by and therefore could be used by a plurality of vehicle original equipment manufacturers (OEM). For example, the apparatus 30 could use the same instance CA for a plurality of vehicle OEMs to simplify implementation and/or data handling. This way, a scalability even after production of the apparatus 30 could be provided. For example, the universal instance certificate authority can be generated by use of a digital key applet, e.g., which could be stored on the apparatus 30, e.g., during a setup process.

For example,[1] could be changed to incorporate the universal instance CA. In section 4.1 Applet Instance Layout the feature in line 8 and 9 "A different Instance CA shall be used for each Vehicle OEM." could be canceled. This feature could be replaced by " An (universal) Instance CA shall be used for different Vehicle OEM.". This way, [1] could be adapted to the universal instance CA.

In an example, the signal may comprise information indicative of a digital key applet. For example, the digital key applet may be stored in a secure element of the apparatus 30, e.g., comprised by the storage circuitry 36. The digital key applet may be an applet compliant to [1]. The information indicative of the digital key applet can be received during a manufacturing process of the apparatus 30, can be received from a chip manufacturer of an NFC/SE Chip, which may be integrated into the apparatus 30. Thus, the digital key applet can be stored on the apparatus 30 before a user may become an owner of the apparatus 30.

In an example, the signal may comprise information indicative of a generation for a digital key during a digital key sharing (e.g., a key sharing flow). For example, KeyCreation Data and/or Attestation Data according to [1] can be transmitted from the device, e.g., an owner, an admin, a server via an internet link from a backend to the apparatus 30. This way, the apparatus 30 can receive required information of a key sharing flow without an internet connection.

In an example, the interface circuitry 32 may be further configured to transmit to the device a key signing request comprising a certificate comprising a friend digital key certificate. Thus, the Device Certificate Chain defined in section 16.4 in [1] could be adapted for the apparatus 30 to consume less storage capacity. This way, a verification of the certificate chain needed for a key sharing flow can be performed partly by the backend.

In principle, the basic certificate chain model described in 16.4 in [1] could be reused such like:
→ attest /verify
=> trust
Vehicle OEM CA ⇒ Device OEM CA
Device OEM CA ⇒ Instance CA Certificate
Vehicle OEM CA Certificate → Device OEM CA Certificate → Instance CA Certificate→ Digital Key Certificate

However, for example, certificates stored on the apparatus 30 could be reduced in size to speed up transfer speed and/or storage needs (e.g. using minimal, dedicated TLV format). For example, the device does not necessarily need to check the vehicle OEM certification chain. This check could be done during key deployment, if done using a backend, e.g., a "device OEM backend", connected via an NFC reader of the device to the apparatus 30. This way, a reduction of required resources on the smart token 30, e.g., a storage capacity, can be achieved by outsourcing the verification of the vehicle certificate chain, e.g., in a backend, e.g., of the vehicle OEM. Thus, the certificate chain known from [1] does not have to be stored completely on the apparatus 30. The apparatus 30 OEM CA certificate can be verified in the backend. Only the friend digital key certificate (e.g., if an association exist between the apparatus 30 and an owner of the apparatus 30) or the friend digital key certificate and the instance certificate authority certificate (if now association exist between the user and the apparatus 30) have to be transmitted by the apparatus 30 to the device. Thus the certificate chain could be
(Vehicle OEM CA Certificate → Device OEM CA Certificate) → (optional) Instance CA Certificate→ Digital Key Certificate.
Mandatory only the Digital Key Certificate has to be transmitted by and thus stored on the apparatus 30.

For example, the Key Sharing Certificate Chain described in section 16.8 in [1] could be changed as follows:
Before issuing the Digital Key to the friend, the owner device verifies the authenticity of the public key created in the friend device. The friend device may be a different device brand than the owner device.

It is assumed that the vehicle has provided to the owner SE the Vehicle OEM CA PK, stored safely in the authorized_PK structure within the Digital Key Creation Data [L]. For verification, the friend device provides the Instance CA Certificate [E]
→ attest /verify
⇒ trust

The owner server / vehicle OEM server / key tracking server / verifies:
(Vehicle OEM CA PK → friend Device OEM CA Certificate) → (optional) friend Instance CA
Certificate → friend Digital Key Certificate

The owner device signs the friend Digital Key Certificate using the owner's private key. The vehicle verifies the owner signature (and key tracking signature, if used) before accepting the friend's public key when presented by the friend device or online through the Vehicle OEM Server:
Owner PK → friend Digital Key Certificate
Vehicle OEM CA PK → friend Device OEM CA Certificate → friend Instance CA Certificate → friend Digital Key Certificate

This way, a trust in the instance CA certificate could be verified by the vehicle OEM in a backend system that has access to the device OEM CA certificate, if either immobilizer token deployment is done through key tracking or Key creation is done using a key management server/server-based owner device. This may avoid the necessity to carry certificates for each vehicle OEM on the apparatus 30 which may result in a better scalability after market introduction and/or smaller storage capacity needed. Alternatively a central certification authority could certify the apparatus 30.

In an example, the processing circuitry may be further configured to generate a digital key and to overwrite a digital key in the storage circuitry if the storage circuitry already comprises a digital key. For example, the processing circuitry may be configured to generate a digital key, to manage an eligibility and/or entitlements of a digital key and to overwrite a digital key in the storage circuitry if the storage circuitry already comprises a digital key.

As shown in Fig. 1 the respective interface circuitry 32 is coupled to the respective storage circuitry 36 at the apparatus 30. Optionally, the interface circuitry may be coupled to a processing circuitry. In examples the processing circuitry may be implemented using one or more processing units, one or more processing devices, any means for processing, such as a processor, a computer or a programmable hardware component being operable with accordingly adapted software. Similar, the described functions of the processing circuitry may as well be implemented in software, which is then executed on one or more programmable hardware components. Such hardware components may comprise a general-purpose processor, a Digital Signal Processor (DSP), a micro-controller, etc. The processing circuitry is capable of controlling the interface circuitry 32, so that any data transfer that occurs over the interface circuitry 32 and/or any interaction in which the interface circuitry 32 may be involved may be controlled by the processing circuitry.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be incorporated into a bracelet, a ring.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 5).

Fig. 2 shows a block diagram of an example of a device 10. The device 10 is for setting up an apparatus as described with reference to Fig. 1. The device 10 comprises interface circuitry configured to transmit, to the apparatus, a signal comprising information indicative of a digital key protocol to enable a key sharing flow between the apparatus and a device and processing circuitry (14) configured to generate the signal. This way, the apparatus can be configured to act in conformity with the digital key protocol, e.g. the CCC as described [1]). Thus, a battery-free device can be utilized as digital key according to the CCC standard [1].

In an example, the interface circuitry may be further configured to transmit a tracking signal, meaning registering a digital key to a backend, e.g., an OEM, and the processing circuitry may be further configured to generate the tracking signal. This way, a digital key can be maintained by the backend.

For example, a digital key tracking and/or a key tracking attestation retrieval (if required) could be done using a communication link to the backend, e.g., the vehicle OEM server. This may be done by connecting to the vehicle OEM server through the device 10, e.g., through an owner device, a device OEM server. For example, a digital key stored on the apparatus can be registered in a backend. This way, the backend can be informed about a digital key on the apparatus. Thus, the backend may receive information about a plurality of registered digital keys, e.g., a plurality of digital keys on a plurality of apparatuses which may be assigned to the same vehicle. Therefore, a maintaining of the digital keys of a vehicle can be improved.

Optionally, a CCC digital key applet interface for key creation and attestation could be reused (with potential changes in certificate formats). Optionally, key configuration ("entitlements") can be fully reused and/or extended where needed. e.g. specific access rights can be supported.

In an example, the signal may further comprise information indicative of a digital key. This way, the device can transmit information needed gaining access to a vehicle.

In an example, the signal further comprises information indicative of an invalidation of a digital key stored on the apparatus. For example, deleting a digital key may be mainly done through the vehicle using existing key deletion flows. For example, a key cleanup on the apparatus could be done through the CCC VIEW/TERMINATE ENDPOINT interfaces using a proxy, e.g., the device 10. To support this, it could be beneficial to store a list of digital keys supposed to be on the apparatus in a device OEM backend and synchronize the digital keys (e.g., execute deletions if necessary) through a proxy, e.g., through the device 10.

In an example, the tracking signal may further comprise information indicative a certificate used for generating a digital key stored on the apparatus. For example, the digital key may be made known to a vehicle. If using a key tracking, vehicle OEM server may be used. Else an offline key sharing flow through attestation in private mailbox may be used.

In an example, the device is at least one of a user equipment or a smart card reader (e.g., connected to a computer). For example, the user equipment may be a communication device within the meaning of the respective communication standards being used for mobile communication, e.g., a mobile phone, such as a smartphone, or another type of mobile communication device, such as a smartwatch, a laptop computer, a tablet computer, or autonomous augmented-reality glasses.

As shown in Fig. 2 the respective interface circuitry 12 is coupled to the respective processing circuitry 14 at the device 10. In examples the processing circuitry 14 may be implemented using one or more processing units, one or more processing devices, any means for processing, such as a processor, a computer or a programmable hardware component being operable with accordingly adapted software. Similar, the described functions of the processing circuitry 14 may as well be implemented in software, which is then executed on one or more programmable hardware components. Such hardware components may comprise a general-purpose processor, a Digital Signal Processor (DSP), a micro-controller, etc. The processing circuitry 14 is capable of controlling the interface circuitry 12, so that any data transfer that occurs over the interface circuitry 12 and/or any interaction in which the interface circuitry 12 may be involved may be controlled by the processing circuitry 14.

In an embodiment the device 10 may comprise a memory and at least one processing circuitry 14 operably coupled to the memory and configured to perform the below mentioned method.

In examples the interface circuitry 12 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 12 may be wireless or wireline and it may be configured to communicate, e.g., transmit or receive signals, information with further internal or external components.

The device 10 may be a computer, server, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

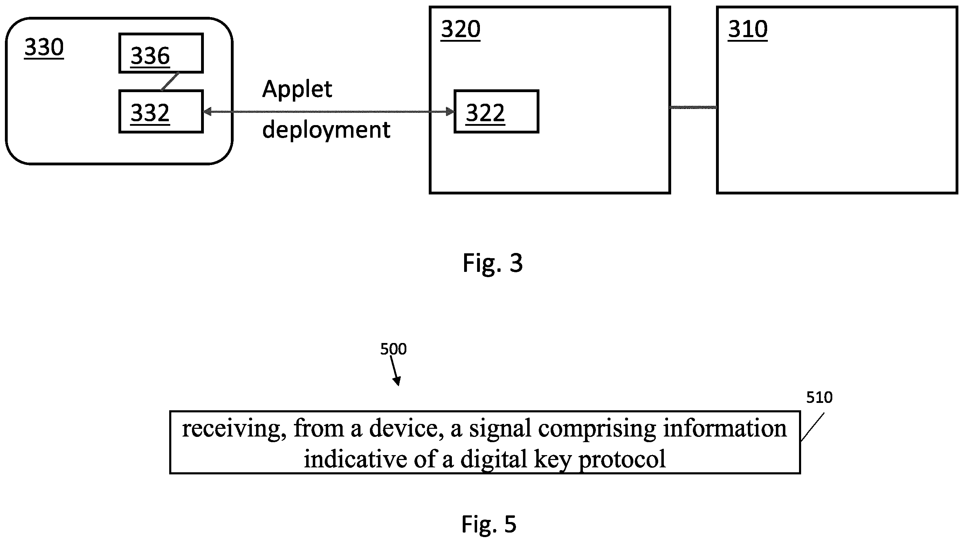

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 5).

Fig. 3 shows an example of a block diagram an applet deployment. The applet deployment may be performed by a personal computer 310, an NFC reader 320 (comprising an NFC interface circuitry 322) and an apparatus 330. The apparatus 330 may comprise a secure element 336 (or a hardware security model) and an NFC interface circuitry 332. The apparatus can be a key card which can be integrated into personal belongings of a user, e.g., a bracelet, a ring.

A CCC compliant applet (following CCC applet specification from [1]) may be deployed to the SE 336 (or a hardware security model) using application protocol data unit commands in an initial apparatus 330 production or setup process. Alternatively, a chip supplier could develop a CCC compliant NFC/secure element chipset that have a preinstalled CCC applet compliant to [1].

More details and aspects are mentioned in connection with the embodiments described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4 - 5).

Figs. 4a, 4b show examples of device structures. The device structures shown in Fig. 4a and Fig. 4b can be used to replace the device functional element known from Fig. 2.2 in [1]. Fig. 4a shows a device structure where only NFC connectivity is given, e.g. a Smart Card. Fig. 4b shows another device structure which could be for a keyfob e.g., a keyfob with BLE/UWB connectivity. For this structure the implementation of the digital key framework on the apparatus would be required to provide limited BLE/UWB connectivity. Further, the device structures show that no immediate internet connectivity may be needed on the side of the apparatus.

More details and aspects are mentioned in connection with the embodiments described above and/or below. The example shown in Fig. 4 may comprise one or more optional additional features corresponding to one or more aspects mentioned in connection with the proposed concept or one or more examples described above (e.g., Fig. 1 - 3) and/or below (e.g., Fig. 5).

Fig. 5 shows an example of a method. The method comprises receiving 510, from a device, a signal comprising information indicative of a digital key protocol to enable a key sharing flow between the apparatus and a device.

More details and aspects are mentioned in connection with the embodiments described above. The example shown in Fig. 5 may comprise one or more optional additional features corresponding to one or more aspects mentioned in connection with the proposed concept or one or more examples described above (e.g., Fig. 1 - 4).

### References

- 10: device
- 12: interface circuitry
- 14: processing circuitry
- 30: apparatus
- 32: interface circuitry
- 36: storage circuitry
- 310: personal computer
- 320: NFC reader
- 322: interface circuitry
- 330: apparatus
- 332: NFC interface circuitry
- 336: secure element
- 400: method for an apparatus
- 410: receiving, from a device, a signal

## Claims

1. An apparatus(30) for a vehicle, comprising;
interface circuitry (32) configured to receive, from a device, a signal comprising information indicative of a digital key protocol to enable a key sharing flow between the apparatus and a device; and
storage circuitry (36) configured to store the information.

2. The apparatus (30) according to claim 1, wherein
the interface circuitry (32) is further configured to receive the signal from the device via at least one interface of Bluetooth, Bluetooth Low Energy, ultra-wide band, wireless local-area network or near field communication.

3. The apparatus (30) according to claim 1 or 2, wherein
the signal comprises information indicative of a digital key applet to enable a key sharing flow between the apparatus and the device.

4. The apparatus (30) according to any of the preceding claims, further comprising
processing circuitry configured to generate a universal instance certificate authority, which can be utilized by a plurality of vehicle original equipment manufacturer.

5. The apparatus (30) according to any of the preceding claims, wherein
the signal comprises information indicative of a generation for a digital key during a digital key sharing.

6. The apparatus (30) according to any of the preceding claims, wherein
the interface circuitry (32) is further configured to transmit to the device a key signing request comprising a certificate comprising a friend digital key certificate.

7. The apparatus (30) according to claims 3-6, wherein
the processing circuitry is further configured to generate a digital key and to overwrite a digital key in the storage circuitry if the storage circuitry already comprises a digital key.

8. A device (10) for setting up an apparatus according to any of the preceding claims, comprising:
interface circuitry (12) configured to transmit, to the apparatus, a signal comprising information indicative of a digital key protocol to enable a key sharing flow between the apparatus and a device; and
processing circuitry (14) configured to generate the signal.

9. The device (10) according to claim 8, wherein
the interface circuitry (12) is further configured to transmit a tracking signal to register a digital key to a backend; and
the processing circuitry (14) is further configured to generate the tracking signal.

10. The device (10) according to any of claim 8 or 9, wherein
the signal further comprises information indicative of a digital key.

11. The device (10) according to any of the claims 8 - 10, wherein
the signal further comprises information indicative of an invalidation of a digital key stored on the apparatus.

12. The device (10) according to any of the claims 9 - 11, wherein
the tracking signal further comprises information indicative of a certificate used for generating a digital key stored on the apparatus.

13. The device (10) according to any of the claims 8 - 12, wherein
the device is at least one of a user equipment or a smart card reader.

14. A method, (400) for an apparatus, comprising:
receiving (410), from a device, a signal comprising information indicative of a digital key protocol to enable a key sharing flow between the apparatus and a device.

15. A computer program having a program code for performing the method (100) according to claim 14, when the computer program is executed on a computer, a processor, or a programmable hardware component.
